# FASCICULE DE BREVET EUROPEEN

(11) **EP 0 779 034 B1**
(45) Date de publication et mention de la délivrance du brevet: **02.04.2003**
(21) Numéro de dépôt: 95203450.2
(22) Date de dépôt: 12.12.1995
(51) Int. Cl.: A23G 9/02, A23G 9/26

(54) **Friandise glacée**
Speiseeis
Frozen confection

(43) Date de publication de la demande: 18.06.1997
(73) Titulaire: SOCIETE DES PRODUITS NESTLE S.A., 1800 Vevey (CH)
(72) Inventeur: Cathenaut, Philip Igor, F-60000 Beauvais (FR); Callens, Ginette, F-60000 Beauvais (FR)
(74) Mandataire: Archambault, Jean

(56) Documents cités:
- EP-A- 0 674 841
- FR-A- 1 573 397
- DATABASE WPI Derwent Publications Ltd., London, GB; AN 80-33934c XP002006149 & JP-B-55 013 708 (ABE) , 11 Avril 1980
- DATABASE WPI Derwent Publications Ltd., London, GB; AN 70-28790r XP002006150 & JP-B-04 501 591 (SATO ET AL.) , 1970
- DATABASE WPI Derwent Publications Ltd., London, GB; AN 73-45415u XP002006151 & JP-A-48 026 233 (YOSHINORI SODA) , 1973

## Description

La présente invention concerne un article de confiserie glacée entrant en effervescence lors de sa consommation, ainsi qu'un procédé de fabrication d'un tel article.

La réalisation d'articles glacés entrant en effervescence au contact de l'eau dans la bouche lors de leur consommation et procurant donc une sensation de pétillance du même ordre que celle obtenue dans les boissons gazeuses pose un problème. Dans les boissons gazeuses, la sensation de pétillant provient du gaz carbonique sous pression. Dans une glace, ce gaz se solubilise et s'évapore sans provoquer la sensation recherchée.

Une solution au problème posé a été proposée, par exemple dans FR-A-1573397, par l'incorporation dans la glace de réactifs d'effervescence en poudre qui sont enrobés d'une substance imperméable à l'eau, une matière grasse, susceptible de se liquéfier dans la bouche et de libérer alors les réactifs qui, une fois mis en présence en solution dans l'eau, réagissent en dégageant du gaz carbonique. Les réactifs d'effervescence sont de préférence dispersés ensemble dans la matière grasse par l'entremise d'un agent dispersant, puis le mélange est mis sous forme de microbilles par pulvérisation dans l'azote liquide. Ce procédé est assez compliqué et la sensation d'effervescence obtenue en bouche est légère du fait de la nécessité d'utiliser pour l'enrobage une graisse à point de fusion relativement élevé qui ne peut libérer que lentement les réactifs d'effervescence puisqu'elle ne fond pas assez rapidement en bouche.

Dans la demande de brevet EP-A-0674841, le problème a été résolu en liaison avec la fabrication de sucettes glacées, en séparant les réactifs d'effervescence les uns des autres en les plaçant dans des couches glacées juxtaposées longitudinalement. Cette solution a cependant des limites car elle nécessite la formation des couches séparées longitudinales en plusieurs étapes de moulage par la technique dite du produit dans le produit, d'abord d'un noyau dans une première série de moules, puis insertion du noyan et formation d'un enrobage ou d'un complément dans une seconde série de moules.

L'invention concerne donc un article de confiserie glacée contenant des réactifs d'effervescence, susceptibles de procurer une sensation de pétillance en bouche par libération rapide de gaz carbonique, caractérisé par le fait que les réactifs d'effervescence sont séparés les uns des autres en étant englobés dans des granulés de granité, sous forme cristallisée, congelés en écailles sans l'intermédiaire d'agent imperméable à l'eau.

Dans la suite de la description, on appelera "granités" les granules congelés cristallisés.

La composition des granités est celle d'une glace à l'eau ou d'un sorbet, contenant des sucres, colorée et aromatisée en principe non ou peu foisonnée.

Les articles de confiserie glacée entrant dans le cadre de l'invention peuvent être des barres, des sucettes, des bouchées, des cônes ou des petits pôts. Ce qui est nécessaire, c'est que les granités contenant les réactifs soient mélangés selon une certaine proportion et fondent en bouche et qu'ainsi les réactifs entrent en contact dès que l'on suce, croque ou consomme l'article au moyen d'une cuiller.

Selon l'invention, ce sont de préférence des sucettes glacées avec bâtonnet ou des petits cylindres à sucer ou à croquer contemus dans une gaine dont on les extrait progressivement par pression.

L'article peut avoir une apparence homogène avec des granités non différenciés visuellement ou être composé de couches juxtaposées contrastées à base de granités de couleurs, de taille et de parfums différents, donnant des effets décoratifs ou de texture.

L'article, par exemple une sucette glacée, peut être également composite, par exemple constituée d'une coque extérieure fabriquée par la méthode classique de congélation en moule d'une couche extérieure et soutirage du centre encore liquide, ce qui forme une cavité dans laquelle les granités peuvent être dosés. La couche extérieure peut être de composition neutre.

L'article peut en variante être constitué des réactifs secs, en poudre, de préférence dilués en l'absence d'eau dans un excipient, par exemple un sirop de glucose, mélangés à basse température, par exemple de l'ordre de -30° C, avec du granité qui peut alors être neutre et constituer un support La masse de granité peut également contenir des annexes, notamment des morceaux de confiserie pétillante tels que, par exemple les PETA ZETA ® qui conservent leur propriété lorsqu'ils sont mélangés aux granités.

L'invention concerne également un procédé de fabrication d'un article de confiserie glacée précédent, caractérisé par le fait que l'on congèle de manière séparée, d'une part un premier type de granulés de granité à partir d'une composition contenant un premier réactif d'effervescence, et d'autre part un second type de granulés de granité à partir d'une composition contenant une second type de réactif d'effervescence susceptible de réagir avec le premier en bouche pour produire une sensation d'effervescence, puis que l'on mélange les deux types de granulés de granité, qu'on les dose dans des moules et qu'on les tasse dans les moules.

Pour mettre en oeuvre le procédé, on peut constituer les mélanges des deux types de granulés de granité en tenant compte de la nature des réactifs et des volumes respectifs des granités dictés, le cas échéant par la forme de l'article dans des proportions permettant une réaction la plus totale possible par fusion en bouche. Ceci étant acquis, on peut régler le niveau de l'effervescence en fonction des concentrations des réactifs.

Comme réactifs d'effervescence, on peut utiliser tous composés comestibles susceptibles de réagir entre eux pour produire du gaz carbonique en solution aqueuse. On utilisera, de préférence d'une part un carbonate hydrosoluble approprié, par exemple le bicarbonate de sodium ou de potassium et d'autre part un acide, par exemple l'acide malique, tartrique, lactique ou de préférence citrique.

La fabrication des granulés de granité a lieu de manière classique par mise en solution de l'agent d'effervescence dans la phase aqueuse, puis congélation en couche mince et broyage grossier en écailles à basse température.

Pour masquer les goûts étrangers, salé et respectivement acide apportés par les réactifs d'effervescence, on peut, de préférence, augmenter par exemple la matière sèche de la composition contenant l'acide, par exemple par addition d'hydrates de carbone sous forme de pulpe de fruits.

Selon une variante du procédé, on peut mélanger les réactifs d'effervescence à sec, sous forme de poudre avec du granité à basse température, par exemple à environ - 30° C sans que les poudres ne se dissolvent. Dans la mesure où les réactifs purs sont trop concentrés pour être intégrés tels quels, on les allonge de préférence avec un excipient sec, par exemple un sirop de glucose. Dans ce cas, il n'y a qu'un seul granité neutre qui constitue un support pour les réactifs. On peut incorporer au granité des morceaux, notamment de confiserie pétillante, par exemple les PETA ZETA ® qui conservent leur propriété lorsqu'ils sont mélangés à du granité.

Pour fabriquer des articles composites, tels que mentionnés précédemment, on peut réaliser la congélation d'une coque par dosage d'une composition dans un moule et aspiration du centre encore liquide, puis verser un mélange de granités dans la cavité ainsi créée. La coque peut, le cas échéant, contenir l'un des réactifs d'effervescence et le granité l'autre.

Dans le cas particulier des sucettes glacées à bâtonnet, il peut s'avérer avantageux d'aménager des interstices dans la partie centale de la sucette, par exemple à l'aide d'un poinçon, puis d'y doser une composition liquide, qui en s'insinuant dans les interstices et en congelant, peut servir d'armature pour consolider le granité et également servir d'ancrage pour le bâtonnet.

Les dessins annexés ci-après illustrent l'invention à titre d'exemple. Dans ceux-ci,
La figure 1 est une vue schématique d'ensemble du procédé de fabrication d'un mode de réalisation particulier d'un bâtonnet glacé,
La figure 2 est une vue schématique d'ensemble du procédé de fabrication d'un mode de réalisation particulier d'un bâtonnet glacé composite,
Les figures 3, 4, 5 et 6 illustrent différents éléments tasseurs et
Les figures 7 et 8 illustrent la fabrication d'un bâtonnet glacé de forme particulière, dite tridimentionnelle.

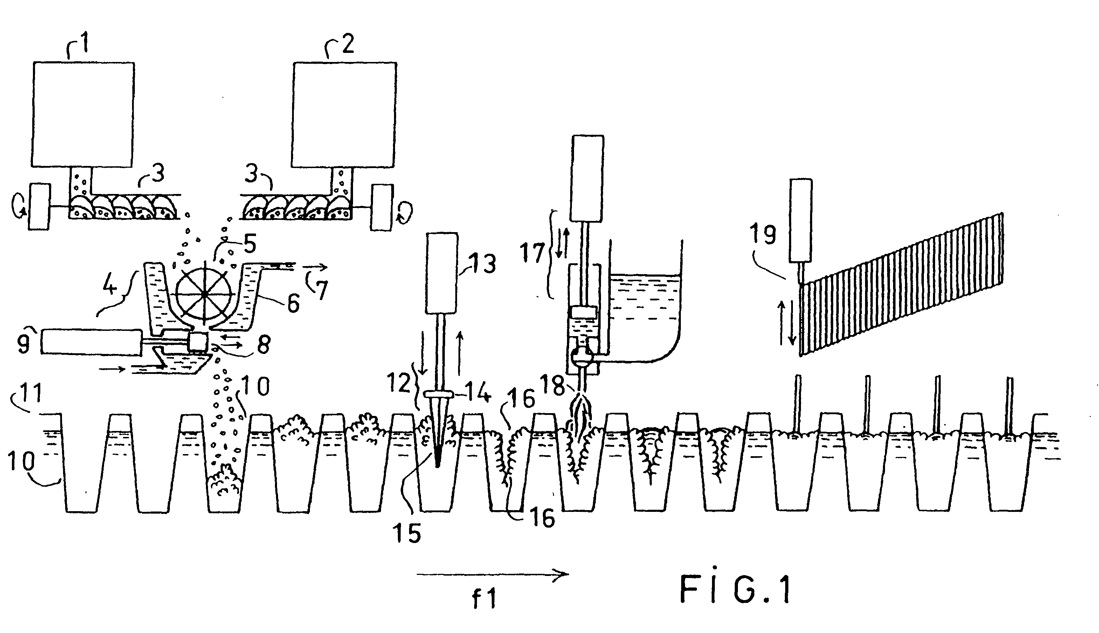

A la figure 1, le dispositif 1produit un granité acide contenant de l'acide citrique à partir d'une solution aqueuse sucrée et aromatisée d'acide citrique par congélation et écaillage à basse température. De même, le dispositif 2 produit un granité bicarbonaté à partir d'une solution aqueuse sucrée et aromatisée de bicarbonate de sodium. Les dispositifs 1 et 2 sont placés à proximité de la ligne de congélation.

Chacun des granités est acheminé par les vis d'Archimède 3 jusqu'à une doseuse 4 pourvue d'un élément mélangeur/racleur 5. La trémie 6 de la doseuse 4 est munie d'une double enveloppe dans laquelle circule un fluide de réfrigération 7, provenant, par exemple d'une dérivation du bac de congélation de la machine à bâtonnets, par exemple, de la saumure de chlorure de calcium ou de l'eau glycolée. Il est nécessire en effet que la température de la surface interne de la doseuse soit très basse, par exemple environ - 30° C, pour que le granité ne fonde pas au cours du mélange et du dosage.

Le fond de la trémie 6 est ouvert sur autant de chambres de dosage qu'il y a de pistes sur la ligne de congélation. Pour doser la quantité choisie de granités, les pistons 8 actionnés par les vérins 9 déchargent le mélange de granités dans les moules 10, disposés en rangées, fixés à une chaîne 11 de transport des rangées de moules cheminant pas à pas dans la direction de la flèche fl. A chaque pas de la chaîne de transport 11 des rangées de moules 10, les rangées progressent et les différentes opérations s'effectuent entre chaque mouvement de la chaîne.

Après remplissage des moules 10, un élément tasseur 12 actionné par un vérin 13 descend et tasse le granité en le comprimant. Le tasseur 12 a deux parties qui remplissent chacune une fonction: sa partie supérieure 14, plane et dont la section est ajustée à celle du moule et bien entendu ne peut l'excéder, a un rôle de compression du granité pour combler les vides, cependant que sa partie inférieure 15, en forme de poinçon, aménage des interstices 16 dans toute la hauteur de la masse de granité.

A partir de la doseuse 17, une petite quantité de composition liquide 18 est coulée dans les interstices 16 formés par le poinçon du tasseur. Cette composition peut être neutre ou aromatisée. Elle peut être colorée. En s'insinuant plus ou moins dans le granité et en congelant, ce complément constituera une armature destinée à consolider le granité qui aurait tendance à se désagréger lors de chocs. Cette armature sert également de point d'ancrage du bâtonnet. Dans la mesure où la composition qui constitue ce complément est colorée, par exemple d'une autre couleur que le granité, elle peut contribuer à décorer les surfaces externe et supérieure de l'article, par exemple si les interstices sont traversants.

Les opérations qui suivent de bâtonnage au moyen d'un dispositif 19, puis de démoulage, d'enveloppage et de conditionnement (ces dernières opérations n'étant pas représentées) sont classiques. On peut prévoir une opération supplémentaire d'enrobage qui est également classique (non représentée), par exemple par trempage dans un bain de composition aqueuse après le démoulage, de manière à protéger le granité des chocs thermiques et mécaniques.

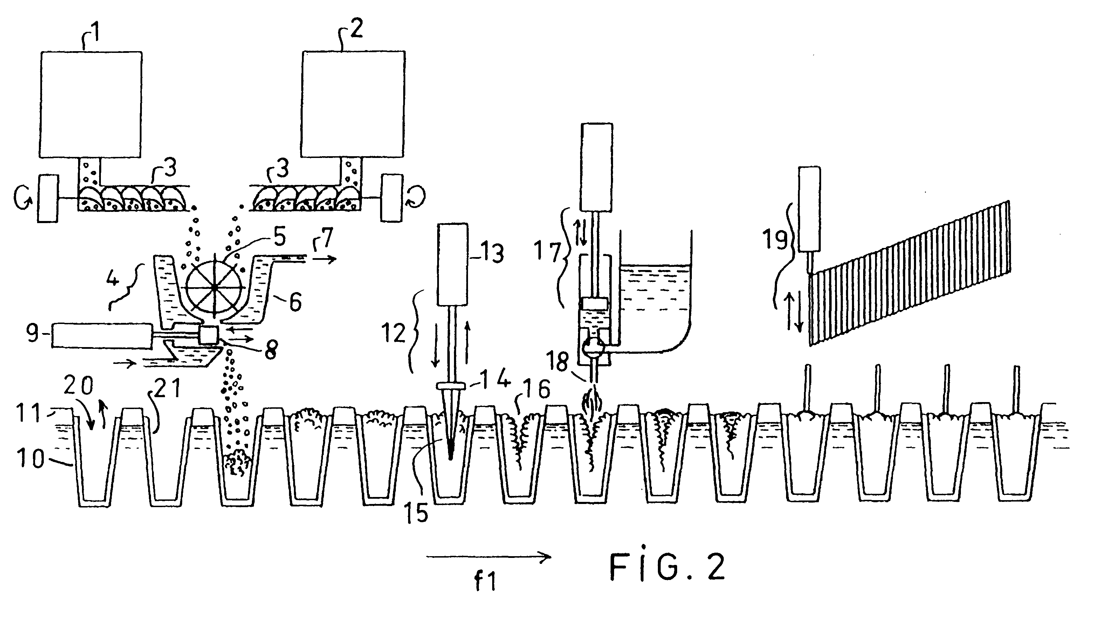

A la figure 2, les opérations sont semblables à celles montrées à la figure 1, à la différence près que l'on dose préalablement une composition liquide à glacer 20 dans les moules 10, puis après avoir congelé la surface, on soutire le centre de manière à former une coque 21. Après celà on procède aux opérations indiquées à la figure 1 à partir de la coque 21 comme moule. De cette manière, on fabrique un bâtonnet composite.

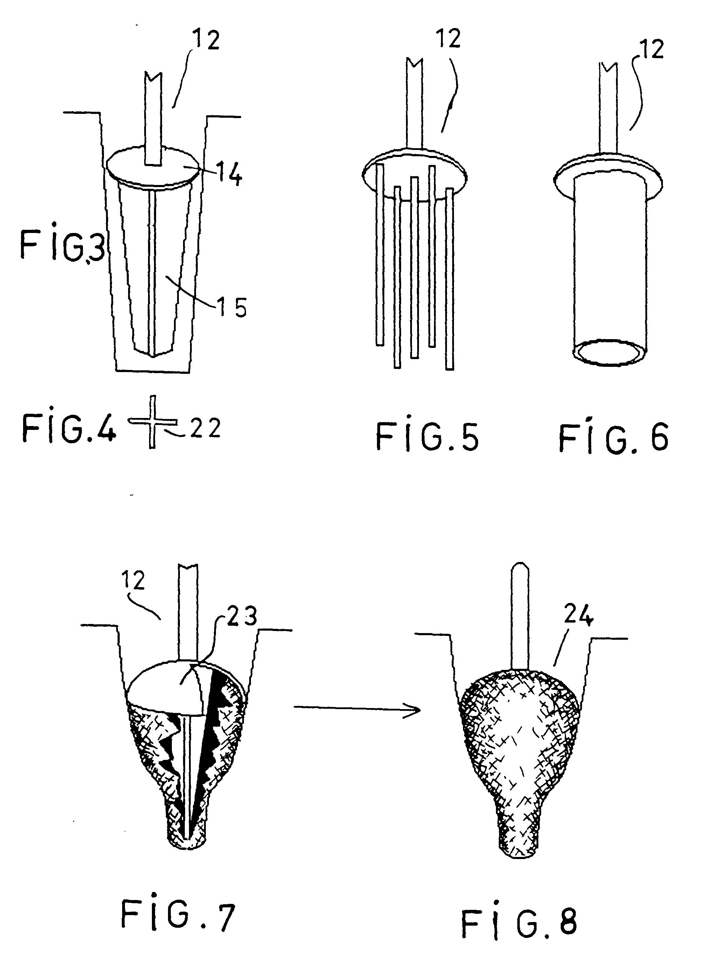

A la figure 3, l'élément tasseur 12 comporte une surface supérieure plane 14 qui joue le rôle de piston de compression du granité dans le moule et une partie inférieure 15 en forme de poinçon. La figure 4 montre la section cruciforme 22 du poinçon qui présente l'avantage de ménager dans le granité des interstices qui, une fois remplis de composition liquide et cette composition une fois congelée, ont une structure d'armature rigide qui se prolonge jusqu'à être proche de la surface de l'article.

Les figures 5 et 6 montrent des formes particulières de tasseur, adaptées à différents types de moules.

Comme montré à la figure 7, la partie supérieure du tasseur est en forme de dôme 23, qui a une fonction de matriçage de la partie supérieure du granité. En effet, le granité a la propriété d'être formable. Cette particularité permet le moulage d'articles tridimentionnels tels que 24 (figure 8), sans devoir recourir à l'utilisation de contre-moules, ce qui simplifie considérablement l'équipement.

Le procédé décrit précédemment permet la congélation d'articles de gros diamètre, à concurrence de la largeur des barres de moules. En effet, la masse de granité étant déjà congelée au moment du dosage, il n'est pas nécessaire de réduire la cadence de la machine pour donner le temps à l'article de congeler à coeur, cette durée étant fonction du diamètre de l'article pour une température donnée. De plus, la composition liquide insérée dans les interstices congèle très rapidement au contact du granité pour former l'armature interne des articles.

## Revendications

1. Article de confiserie glacée contenant des réactifs d'effervescence, susceptibles de procurer une sensation de pétillance en bouche par libération rapide de gaz carbonique, **caractérisé par le fait que** les réactifs d'effervescence sont séparés les uns des autres en étant englobés dans des granulés de granité, sous forme cristallisée, congelés en écailles, sans l'intermédiaire d'agent imperméable à l'eau.

2. Article selon la revendication 1, sous forme de barre, de sucette, de bouchée, de cône ou de petit pôt.

3. Article selon la reventication 1, notamment sucette glacée composite, constituée d'une coque extérieure continue et d'un noyau central en granulés de granité.

4. Article selon la revendication 1, **caractérisé par le fait qu'**il contient des annexes, notamment des morceaux de confiserie pétillante qui conservent leur propriété de pétillance lorsqu'ils sont mélangés aux granulés de granité.

5. Procédé de fabrication d'un article de confiserie glacée pétillant, **caractérisé par le fait que** l'on congèle de manière séparée, d'une part un premier type de granulés de granité à partir d'une composition contenant un premier réactif d'effervescence, et d'autre part un second type de granulés de granité à partir d'une composition contenant une second type de réactif d'effervescence susceptible de réagir avec le premier en bouche pour produire une sensation d'effervescence, puis que l'on mélange les deux types de granulés de granité, qu'on les dose dans des moules et qu'on les tasse dans les moules.

6. Procédé de fabrication d'un article de confiserie glacée pétillant, **caractérisé par le fait que** l'on mélange les réactifs d'effervescence à sec, sous forme de poudre avec des granulés de granité à basse température sans que les poudres ne se dissolvent, que l'on allonge les réactifs avec un excipient sec, notamment un sirop de glucose, que l'on dose le mélange dans des moules et qu'on le tasse dans les moules.

7. Procédé selon la revendication 5 ou 6, destiné à la fabrication d'articles composites, **caractérisé par le fait que** l'on congèle une coque par dosage d'une composition dans un moule et aspiration du centre encore liquide, puis que l'on verse des granulés de granité dans la cavité ainsi créée.

8. Procédé selon la revendication 5 ou 6, de fabrication de sucettes glacées à bâtonnet, **caractérisé par le fait que** l'on aménage des interstices dans la partie centrale de la sucette à l'aide d'un poinçon, puis que l'on y dose une composition liquide, qui en s'insinuant dans les interstices et en congelant, sert d'armature pour consolider les granulés de granité et sert également d'ancrage pour le bâtonnet.

9. Procédé selon la revendication 5 ou 6, **caractérisé par le fait qu'**après tassage des granulés de granité et, le cas échéant, insertion d'un bâtonnet, on trempe l'article dans une composition aqueuse d'enrobage de manière à former une couche extérieure protégeant les granulés de granité des chocs thermiques et mécaniques.

## Claims

1. Article of frozen confectionery containing effervescent reagents, capable of producing a fizzing sensation in the mouth by rapid liberation of carbon dioxide gas, **characterized in that** the effervescent reagents are separated from each other by being enclosed in granita granules in a crystallised form, frozen into flakes, without the intervention of a water-impermeable agent.

2. Article according to claim 1, in the form of a bar, an ice-lolly, a small filled ice, a cone or a small tub.

3. Article according to claim 1, in particular a composite ice-lolly, consisting of a continuous outer shell and a central core made of granita granules.

4. Article according to claim 1, **characterized in that** it contains inclusions, in particular pieces of fizzy confectionery which keep their property of being fizzy when they are mixed with the granita granules.

5. Process for the manufacture of an article of fizzy frozen confectionery, **characterized in that** there are frozen separately, on the one hand a first type of granita granules from a composition containing a first effervescent reagent, and on the other hand a second type of granita granules from a composition containing a second type of effervescent reagent able to react with the first in the mouth to produce a sensation of effervescence, that the two types of granita granules are then mixed, that they are metered into moulds and that they are tamped in the moulds.

6. Process for the manufacture of an article of fizzy frozen confectionery, **characterized in that** the effervescent reagents are mixed dry in powder form with the granita granules at a low temperature without the powders dissolving, that the reagents are separated by a substantially dry excipient, in particular glucose syrup, that the mixture is metered into moulds and that it is tamped in the moulds.

7. Process according to claim 5 or 6, intended for the manufacture of composite articles, **characterized in that** a shell is frozen by metering a composition into a mould and sucking out the still liquid centre and that granita granules are poured into the cavity thus created.

8. Process according to claim 5 or 6, for the manufacture of ice-lollies on a stick, **characterized in that** interstices are provided in the central part of the lolly by means of a spike, that a liquid composition is then metered into them, which by infiltrating into the interstices and freezing, acts as a reinforcement for consolidating the granita granules and also serves as an anchorage for the stick.

9. Process according to claim 5 or 6, **characterized in that** after tamping the granita granules, and optionally, inserting a stick, the article is immersed in an aqueous coating composition so as to form an outer layer protecting the granita granules from thermal and mechanical shocks.

## Patentansprüche

1. Eiskonfekt, das Gasentwicklungsreagenzien enthält, die durch schnelles Freisetzen von Kohlendioxid im Mund ein Prikkeln erzeugen können, **dadurch gekennzeichnet, daß** die Gasentwicklungsreagenzien ohne Zuhilfenahme eines wasserundurchlässigen Mittels voneinander getrennt sind, indem sie in gefrorenes schuppenförmiges Granitegranulat in kristallisierter Form eingeschlossen sind.

2. Eiskonfekt nach Anspruch 1 in Form eines Stabs, eines Lutschers, einer Praline, eines Kegels oder kleinen Bechers.

3. Eiskonfekt nach Anspruch 1, insbesondere Verbundeis-Lutscher, bestehend aus einer durchgehenden Außenschale und einem zentralen Kern aus Granitegranulat.

4. Eiskonfekt nach Anspruch 1, **dadurch gekennzeichnet, daß** es Zutaten enthält, insbesondere prickelnde Süßwarenstücke, die ihre prickelnde Eigenschaft beibehalten, wenn sie mit dem Granitegranulat gemischt sind.

5. Verfahren zur Herstellung eines prickelnden Eiskonfektartikels, **dadurch gekennzeichnet, daß** man getrennt einerseits einen ersten Typ von Granitegranulat aus einer ein erstes Gasentwicklungsreagenz enthaltenden Zusammensetzung und andererseits einen zweiten Typ von Granitegranulat aus einer Zusammensetzung gefriert, die einen zweiten Typ von Gasentwicklungsreagenz enthält, das mit dem ersten im Mund reagieren kann, um eine Wahrnehmung von Gasentwicklung zu erzeugen, und daß man dann die beiden Typen von Granitegranulat mischt, sie in Formen zudosiert und sie in den Formen komprimiert.

6. Verfahren zur Herstellung eines prickelnden Eiskonfekts, **dadurch gekennzeichnet, daß** man die Gasentwicklungsreagenzien in Form von Pulver mit Granitegranulat bei niedriger Temperatur trocken mischt, ohne daß die Pulver sich auflösen, daß man die Reagenzien mit einem trockenen Träger, insbesondere mit einem Glucosesirup, streckt, daß man die Mischung in Formen zudosiert und daß man sie in den Formen komprimiert.

7. Verfahren nach Anspruch 5 oder 6, für die Herstellung von Verbund-Artikeln, **dadurch gekennzeichnet, daß** man eine Schale durch Zudosierung einer Zusammensetzung in eine Form und Absaugung des noch flüssigen Inneren gefriert und dann in den auf diese Weise geschaffenen Hohlraum Granitegranulat eingießt.

8. Verfahren nach Anspruch 5 oder 6 zur Herstellung von Eislutschern mit Stiel, **dadurch gekennzeichnet, daß** man in dem zentralen Teil des Lutschers mit Hilfe eines Stempels Zwischenräume herstellt und daß man dann in diese eine flüssige Zusammensetzung zudosiert, die, indem sie in die Zwischenräume eindringt und gefriert, als Bewehrung zur Verfestigung des Granitegranulats und ferner zur Verankerung des Stiels dient.

9. Verfahren nach Anspruch 5 oder 6, **dadurch gekennzeichnet, daß** man nach dem Komprimieren des Granitegranulats und ggf. Einführen eines Stiels den Artikel in eine wässrige Umhüllungszusammensetzung eintaucht, so daß eine Außenschicht gebildet wird, die das Granitegranulat gegen thermische und mechanische Stöße schützt.
